# FASCICULE DE BREVET EUROPEEN

(11) **EP 1 817 124 B1**
(45) Date de publication et mention de la délivrance du brevet: **05.12.2012**
(21) Numéro de dépôt: 05814985.7
(22) Date de dépôt: 26.10.2005
(51) Int. Cl.: B21C 23/10, B21C 23/22, B21C 23/01, B23K 20/00, B64C 1/00

(54) **ELEMENT DE STRUCTURE FILE MONOLITHIQUE ET BI-FONCTIONNEL**
FEIN STRUKTURIERTES BIFUNKTIONELLES MONOLITHISCHES ELEMENT
FINE STRUCTURAL BI-FUNCTIONAL MONOLITHIC ELEMENT

(30) Priorité: 27.10.2004 FR 0411442
(43) Date de publication de la demande: 15.08.2007
(73) Titulaire: Constellium France, 75008 Paris (FR)
(72) Inventeur: EBERL, Frank, F-38120 Le Fontanil (FR); MAUSSION, Joël, F-49800 Trelaze (FR)
(74) Mandataire: Fénot, Dominique
(86) Numéro de dépôt international: PCT/FR2005/002669
(87) Numéro de publication internationale: WO 2006/045952

(56) Documents cités:
- EP-A- 0 508 434
- WO-A1-2007/070731
- US-A- 2 798 604
- US-A- 3 482 003
- US-A- 4 214 925
- US-A- 6 082 073

## Description

### Domaine de l'invention

L'invention concerne un nouveau procédé de fabrication pour des éléments de structure filés en alliage d'aluminium bi-fonctionnels (voir par exemple EP-A-0 508 434 sur lequel le préambule des revendications indépendantes se base) , ainsi que des éléments de structure élaborés par ce procédé. L'invention est particulièrement utile pour la fabrication de raidisseurs soudables pour construction aéronautique.

### Etat de la technique

L'assemblage des éléments de structure métalliques d'un aéronef se fait actuellement essentiellement par rivetage. Le soudage n'est guère utilisé, car les alliages d'aluminium à hautes caractéristiques mécaniques, tels que les alliages de type Al-Cu-Mg de la série 2xxx et les alliages de type Al-Zn-Cu-Mg de la série 7xxx ne peuvent être soudés par fusion d'une manière satisfaisante. En revanche, la plupart des alliages des séries 5xxx et 6xxx sont soudables par fusion. Parmi ces alliages, les alliages 6056 et 6156 sont utilisés pour des éléments de structure d'aéronefs, mais le plus souvent assemblés, même entre eux, par rivetage. Ce n'est que récemment, pour l'assemblage du fuselage des avions Airbus A318 et A380, que le soudage a été utilisé pour la peau de fuselage en alliage 6056 sur des raidisseurs filés en alliage 6056. Ce qui est impossible à présent est de souder un alliage soudable par fusion (tel que le 6056) sur un autre alliage réputé non soudable par fusion (tel que le 7349) ; un tel assemblage ne peut se faire dans la pratique industrielle que par rivetage. Selon l'état de la technique, l'assemblage par soudage de deux pièces en alliages différents impose des contraintes sur le choix de ces deux alliages. Dans l'exemple de la fixation d'une peau de fuselage sur un raidisseur, cette contrainte concerne tant l'alliage choisi pour les raidisseurs que l'alliage choisi pour la peau du fuselage. La prise en compte de ces contraintes nécessite l'optimisation d'un compromis de propriétés, car les deux alliages doivent pouvoir être assemblés par soudage, et de préférence par soudage par fusion (tel que : soudage MIG, TIG, laser), ce qui n'est pas possible avec tous les alliages, et notamment pas avec tous les alliages à traitement thermique. Dans le cas du soudage par friction-malaxage (en anglais Friction Stir Welding), il est possible de souder la plupart des alliages d'aluminium mais il existe des contraintes de configuration géométrique qui font que cette technique n'est pas toujours utilisable. Par « compromis de propriétés » on entend par exemple un compromis entre des propriétés rassemblées sous le terme « résistance mécanique statique » (notamment la résistance à la rupture Rₘ et la limite d'élasticité R_{p0,2}) d'une part, et des propriétés rassemblées sous le terme « tolérance aux dommages » (notamment la ténacité et la résistance à la propagation des fissures) d'autre part. Cependant, même un compromis optimisé de propriétés conduit souvent à des éléments de structure présentant des performances globales moins bonnes. Il serait avantageux pour diminuer le coût et le poids des éléments de structure de pouvoir choisir pour le raidisseur un alliage ayant une haute résistance mécanique statique, pour la peau de fuselage un alliage ayant une haute tolérance aux dommages, et de les assembler par soudage. Disposer d'une solution pour assembler de tels éléments structuraux par soudage conduit à une simplification significative de l'assemblage d'un avion.

Le problème que la présente invention cherche à résoudre est donc de permettre la fabrication d'éléments de structure monolithiques et bi-fonctionnels faisant intervenir deux alliages d'aluminium différents, et plus spécialement de rendre possible l'assemblage par soudage entre un élément de structure en alliage d'aluminium à traitement thermique soudable par fusion (tel qu'une peau de fuselage en tôle en alliage AA6056) et un élément de structure en alliage d'aluminium à traitement thermique réputé non soudable par fusion (tel qu'un raidisseur filé en alliage AA7349).

### Objet de l'invention

L'invention a pour objet un élément de structure filé (F), notamment un raidisseur pour construction aéronautique, comprenant un pied apte à être fixé sur une surface, par exemple par soudage ou toute autre méthode, et un corps, caractérisé en ce que ledit pied est en un premier alliage à base d'aluminium soudable par fusion (B) est en ce que ledit corps est en un second alliage à base d'aluminium (A) à traitement thermique, étant entendu que l'alliage
(A) est différent de l'alliage (B).
   L'invention a également comme objet un procédé de fabrication d'un élément de structure filé, comprenant les étapes suivantes :
   (a) on prépare une billette de filage cylindrique creuse composée d'un tube externe en un second alliage à base d'aluminium (A) à traitement thermique, et d'un tube interne en un premier alliage à base d'aluminium soudable par fusion (B),
   (b) on file par filage sur aiguille un tube creux comportant une pluralité d'ailettes, de manière à ce que lesdites ailettes, de forme droite ou complexe, soient pour leur plus grande partie en second alliage (A), alors que le tube creux est en premier alliage (B),
   (c) on découpe le produit issu de l'étape (b) de manière à obtenir un élément de structure filé (F) comportant un pied en un premier alliage (B) et un corps en second alliage (A) ; cette découpe peut être suivie d'un usinage.
   Un troisième objet de la présente invention concerne l'utilisation d'un tel élément de structure soudé , dans un procédé de fabrication d'un élément de structure notamment pour construction aéronautique, dans lequel
   (a) on soude par fusion un élément de structure filé (F) selon l'invention sur un élément de structure (E) en alliage d'aluminium à traitement thermique,
   (b) on effectue optionnellement un traitement thermique sur ledit élément de structure soudé (G).

### Description des figures

La figure 1 montre la section d'une billette composite creuse à symétrie axiale utilisée pour filer un tube creux. Elle comporte un alliage (A) et un alliage (B).
La figure 2 montre la section d'un tube filé creux utilisé pour obtenir, par découpe longitudinale (indiquée par les flèches), l'élément de structure filé (F) selon l'invention.
La figure 3 montre schématiquement une billette de filage composite qui permet de réaliser l'élément de structure filé (F) selon l'invention, mais qui ne correspond pas à un mode d'exécution préféré. Elle comporte un alliage (A) et un alliage (B).
La figure 4 montre la largeur de la zone de diffusion entre les alliages (A) et (B) pour deux couples d'alliages, AA7349 / AA5086 (référence P5) et AA7349 / AA6056 (référence P6), et trois éléments chimiques suivis : magnésium, cuivre et zinc. La largeur de la zone de diffusion D dans le produit filé est définie comme la largeur entre les points pour lesquels un changement de composition de 0, 1 % en poids de la composition nominale de l'élément dans le produit analysé est observé.

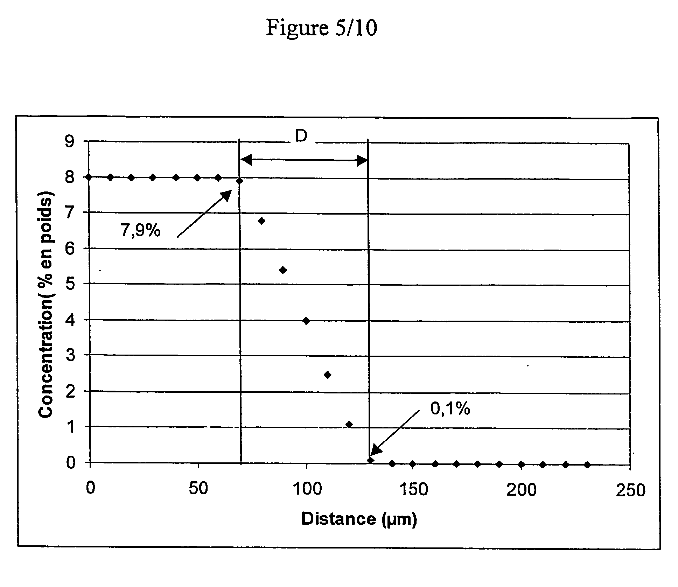

La figure 5 montre dans un exemple la largeur D de la zone de diffusion.
La figure 6 définit la hauteur h (voir double-flèche) de pénétration de l'alliage (B) du pied dans le corps en alliage (A) de l'élément de structure filé (F).
La figure 7 montre de manière schématique le dispositif utilisé pour mesurer la force d'arrachement du corps du profilé.
Les figures 8, 9 et 10 montrent différents modes d'utilisation du profilé selon l'invention.

### Description de l'invention

### a) Définitions

Sauf mention contraire, toutes les indications relatives à la composition chimique des alliages sont exprimées en pourcent massique. Par conséquent, dans une expression mathématique, « 0,4 Zn » signifie : 0,4 fois la teneur en zinc, exprimée en pourcent massique ; cela s'applique mutatis mutandis aux autres éléments chimiques. La désignation des alliages suit les règles de The Aluminum Association, connues de l'homme du métier. Les états métallurgiques sont définis dans la norme européenne EN 515. La composition chimique d'alliages d'aluminium normalisés est définie par exemple dans la norme EN 573-3. Sauf mention contraire, les caractéristiques mécaniques statiques, c'est-à-dire la résistance à la rupture Rₘ, la limite élastique R_{p0,2}, et l'allongement à la rupture A, sont déterminées par un essai de traction selon la norme EN 10002-1, l'endroit et le sens du prélèvement des éprouvettes étant définis dans la norme EN 755-1.

Sauf mention contraire, les définitions de la norme européenne EN 12258-1 s'appliquent. Le terme « tôle » est utilisé ici pour des produits laminés de toute épaisseur.

Le terme « usinage » comprend tout procédé d'enlèvement de matière tel que le tournage, le fraisage, le perçage, l'alésage, le taraudage, l'électroérosion, la rectification, le polissage. Le terme « tube filé » inclut les produits tubulaires et en particulier les tubes filés et étirés.

On appelle ici « élément de structure » ou « élément structural » d'une construction mécanique une pièce mécanique dont la défaillance est susceptible de mettre en danger la sécurité de ladite construction, de ses utilisateurs, des ses usagers ou d'autrui.

Pour un avion, ces éléments de structure comprennent notamment les éléments qui composent le fuselage (tels que la peau de fuselage (fuselage skin en anglais), les raidisseurs ou lisses de fuselage (stringers), les cloisons étanches (bulkheads), les cadres de fuselage (circumferential frames)), les ailes (tels que la peau de voilure (wing skin), les raidisseurs (stringers ou stiffeners), les nervures (ribs) et longerons (spars) et l'empennage composé notamment de stabilisateurs horizontaux et verticaux (horizontal or vertical stabilisers), ainsi que les profilés de plancher (floor beams), les rails de sièges (seat tracks) et les portes.

Le terme « élément de structure monolithique » se réfère ici à un élément de structure qui a été obtenu, le plus souvent par usinage, à partir d'une seule pièce de demi-produit laminé, filé, forgé ou moulé, sans assemblage, tel que rivetage, soudage, collage, avec une autre pièce.

Le terme « élément de structure bi-fonctionnel » se réfère ici principalement aux fonctions conférées par les caractéristiques métallurgiques du produit et non pas par sa forme géométrique.

### b) Description détaillée de l'invention

Selon l'invention, le problème est résolu par l'utilisation d'un élément de structure filé (F) comportant deux alliages coextrudés, dans lequel le pied, c'est-à-dire la partie destinée à être fixée sur la surface d'un autre élément de structure (E), pour former un élément de structure (G), est en alliage (B), et par exemple dans le même alliage que celui sur lequel il doit être fixé, alors que le corps, qui constitue le reste dudit élément de structure filé (F), peut être en alliage à hautes caractéristiques mécaniques (A). L'alliage (B) peut être un alliage à traitement thermique. L'alliage (A) peut avantageusement être un alliage à traitement thermique, afin que l'élément de structure (G) formé par assemblage entre les éléments de structure (F) et (E) puisse être utilisé en construction aéronautique. Un tel élément de structure filé (F) selon l'invention est donc bi-fonctionnel, au sens que son corps répond à des exigences métallurgiques significativement différentes de celles de son pied.

Selon l'invention, pour répondre au problème de rendre possible l'assemblage par soudage, et notamment par soudage par fusion, entre un élément de structure en alliage d'aluminium à traitement thermique et un élément de structure en alliage d'aluminium à traitement thermique réputé non soudable par fusion, l'alliage (B) est un alliage soudable, notamment soudable par fusion, afin que l'assemblage entre l'élément de structure filé (F) selon l'invention et l'élément de structure (E) puisse se faire par soudage. L'alliage (B) peut être un alliage de la série 6xxx, 5xxx ou 4xxx. L'alliage (A) n'a pas besoin d'être soudable, mais cela n'est pas exclu.

La présente invention peut s'appliquer à toute combinaison d'alliages à base d'aluminium filables. Dans une réalisation préférée, l'alliage (A) est un alliage de la série 7xxx, et de manière préférée sélectionné dans le groupe constitué par les alliages 7049, 7149, 7249, 7349, 7449, 7050, 7055, 7075, 7036, 7068, 7136 et l'alliage (B) est sélectionné dans le groupe constitué par les alliages soudables par fusion des séries 4xxx, 5xxx, 6xxx et de manière préférée 6056, 6056A, 6156, 6013, 6060, 6110, 5005, 5083, 5086. On peut aussi utiliser pour l'alliage (A) d'autres alliages de type Al-Zn-Cu-Mg, et notamment ceux à haute teneur en zinc (> 8,7%).

Dans un autre mode de réalisation de l'invention, on peut aussi choisir un alliage (B) qui peut être soudable par soudage par friction-malaxage. On obtient ainsi également un élément de structure filé (F) bi-fonctionnel. A titre d'exemple, dans un élément de structure filé (F) où le corps doit répondre à des exigences de caractéristiques mécaniques statiques et le pied doit être résistant à la fatigue et / ou doit présenter une bonne tolérance aux dommages (ténacité, propagation de fissures, etc), on peut sélectionner l'alliage (A) dans le groupe constitué par les alliages 7049, 7149, 7249, 7349, 7449, 7050, 7055, 7075, 7068, 7036, et l'alliage (B) peut être un alliage de la série 2xxx, et peut être sélectionné dans le groupe constitué par les alliages 2024, 2024A, 2056, 2124, 2224, 2324, 2424, 2524. Dans ce mode de réalisation, l'assemblage des éléments de structure (F) et (E) ne se fait pas nécessairement par soudage, mais peut se faire par les méthodes traditionnelles de rivetage. Ce type d'éléments de structure bi-fonctionnels peut également trouver des applications directes, i.e. qui ne font pas appel à un assemblage avec d'autres éléments de structure.

L'élément de structure filé (F) selon l'invention peut être fabriqué par un procédé comprenant les étapes suivantes :
(a) on prépare une billette de filage cylindrique creuse composée d'un tube externe en alliage à base d'aluminium (A) à traitement thermique, et d'un tube interne en alliage à base d'aluminium soudable par fusion (B),
(b) on file par filage sur aiguille un tube creux comportant une pluralité d'ailettes, de manière à ce que lesdites ailettes, de forme droite ou complexe, soient pour leur plus grande partie en alliage (A), alors que le tube creux soit en alliage (B),
(c) on découpe, et éventuellement usine, le produit issu de l'étape (b) de manière à obtenir des éléments de structure (F) comportant un pied en alliage (B) et un corps en alliage (A).

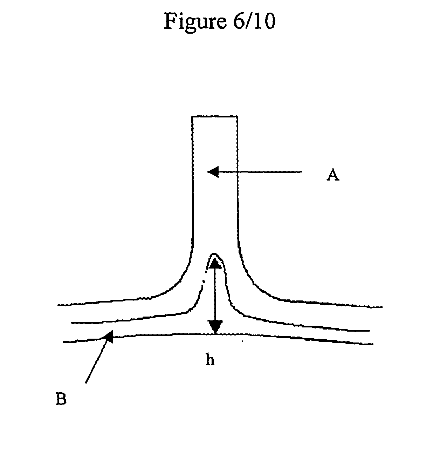

Selon ce procédé avantageux, on élabore d'abord une billette creuse composite à symétrie axiale, qui comprend de manière concentrique deux tubes à section circulaire, le tube interne en alliage (B) de diamètre extérieur D étant enfilé dans le tube externe en alliage (A) de diamètre intérieur D. Cette insertion peut être faite par expansion à chaud du tube externe. On préfère cependant opérer par contraction à froid du tube interne ; la demanderesse a constaté que l'utilisation de ce dernier procédé d'insertion conduit sur l'élément structural filé (F) à une force d'arrachement plus grande. La demanderesse a constaté qu'il est très important que dans la billette creuse composite, l'écart de la symétrie axiale soit aussi faible que possible, car il se répercute directement sur la symétrie de la section du tube creux filé, et notamment sur la constance de l'épaisseur de la paroi interne ainsi que sur la hauteur de pénétration (définie sur la figure 6) de l'alliage (B) dans le corps de l'élément de structure (F).

La découpe à l'étape (c) peut être effectuée selon les techniques connues. Il s'agit d'une découpe longitudinale pour obtenir des longs segments de l'élément de structure filé, qui peuvent être coupées à la longueur souhaitée. Ainsi, les ailettes du tube creux filé deviennent le corps de l'élément de structure (F), alors que le tube creux lui-même devient son pied. Il peut être avantageux de parachever le pied par usinage.

On obtient ainsi un élément de structure (F) monolithique et bi-fonctionnel, dont le corps présente par exemple des caractéristiques de résistance mécanique statique particulièrement élevées, alors que le pied présente par exemple une résistance à la fatigue particulièrement élevée, ou a la caractéristique technique d'être soudable par fusion.

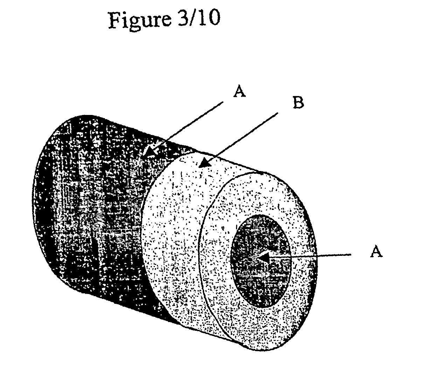

L'élément de structure filé (F) selon l'invention peut aussi être fabriqué par n'importe quel autre procédé qui assure une liaison métallurgique suffisamment forte entre le pied et le corps, telle que caractérisée par la force d'arrachement du corps. Le procédé décrit ci-dessus, basé sur le filage sur aiguille d'une billette creuse composite à symétrie axiale, donne des meilleurs résultats que l'utilisation d'une billette assemblée de manière séquentielle à partir de deux billettes de diamètre extérieur égal (figure 3). Lorsque l'on utilise une telle billette selon la figure 3, on ne procède pas par filage sur aiguille. On peut également utiliser au lieu d'une billette coulée un tube concentrique composé de deux tubes filés et éventuellement usinés.

L'avantage d'utiliser une billette creuse composite à symétrie axiale est que ce procédé assure une bonne homogénéité du produit filé, et notamment une répartition assez constante des deux alliages sur le pied et le corps de l'élément de structure filé (F) en fonction de la longueur du tube creux filé. A titre d'exemple, les inventeurs ont observé qu'entre le début et la fin du tube creux filé à partir d'une billette creuse composite à symétrie axiale, la hauteur h (définie sur la figure 6) diminue d'environ 6 mm à environ 3 mm. Cette légère inhomogénéité ne semble pas avoir d'effet négatif appréciable sur les propriétés d'usage de l'élément de structure (F). Les inventeurs ont constaté que l'utilisation d'un procédé de filage inverse d'une billette creuse composite à symétrie axiale comme décrite ci-dessus minimise cette inhomogénéité.

Le procédé selon l'invention permet de fabriquer des éléments de structure (G) par soudage de l'élément de structure filé (F) avec un autre élément de structure (E), dans lesquels l'application d'une force d'arrachement au corps de l'élément de structure (F) ne conduit normalement pas à une rupture entre le pied et le corps. Cela veut dire qu'on n'observe pas une fragilité mécanique de l'interface entre les alliages (A) et (B).

L'utilisation d'un élément de structure filé (F) selon l'invention permet de réaliser des éléments de structure (G) de grande taille de manière très simple. A titre d'exemple, l'élément de structure filé (F) peut être un raidisseur que l'on soude sur une tôle. Plus généralement, l'invention inclut également un procédé de fabrication d'un élément de structure soudé (G), notamment pour construction aéronautique, dans lequel
(a) on soude par fusion un élément de structure filé (F) sur un produit ou élément de structure (E) en alliage d'aluminium à traitement thermique,
(b) on effectue optionnellement un traitement thermique sur ledit élément de structure soudé (G).

Un tel élément de structure soudé (G) peut être un élément de fuselage d'un avion.

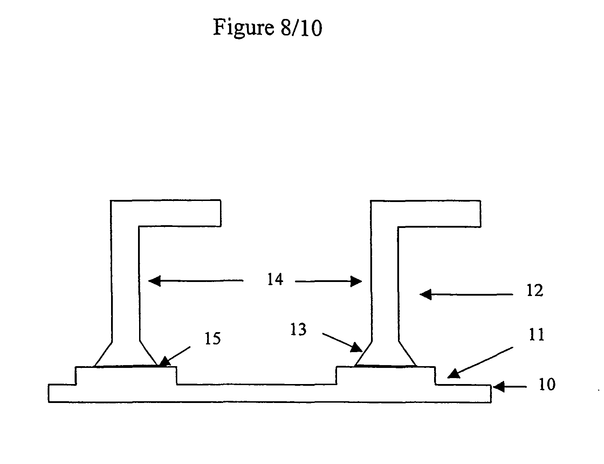

La figure 8 montre un panneau de fuselage (10), représentant le produit (E), dont une des surfaces (11) a été usinée. Un élément de structure filé (F) selon l'invention (repère 12), avec un pied (13) en alliage soudable et un corps (14), a été soudé sur le produit (E), avec formation d'une zone soudée (15).

Un éventuel traitement thermique final se fait sur la pièce soudée. Ainsi, on peut par exemple améliorer son comportement en corrosion. En général, les traitements thermiques de revenu peuvent s'additionner. Par conséquent, il faut que l'état de traitement thermique des éléments de structure (F) et (E) soit bien choisi pour arriver par l'intermédiaire d'un traitement thermique après soudage à un état final de l'élément de structure (G) qui soit satisfaisant, par exemple par le biais d'un pré-revenu sur l'un ou l'autre des éléments. A titre d'exemple, un raidisseur en alliage 7xxx nécessite un revenu d'une durée totale plus courte qu'un demi-produit en alliage 6xxx. Si les tôles sont en alliage 6xxx et les raidisseurs en alliage 7xxx, il faut que les tôles en alliage 6xxx aient été soumises à un pré-revenu avant le soudage, car la durée du traitement thermique qu'elles peuvent subir après soudage est limitée par la durée plus courte du traitement de revenu que doivent subir les raidisseurs en alliage 7xxx après soudage.

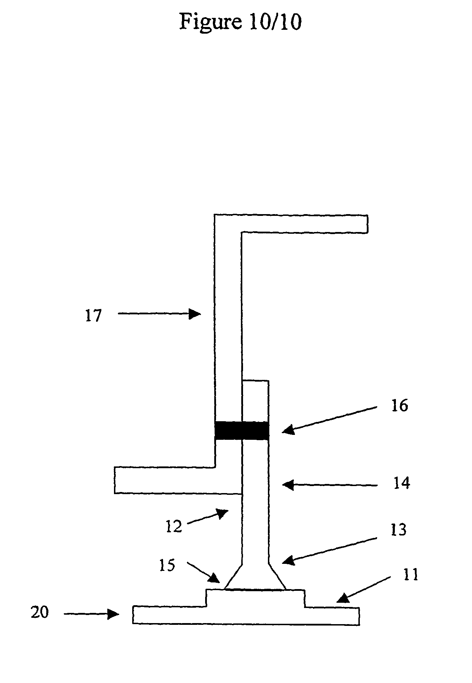

Pour produire des éléments de structure encore plus complexes, le corps de l'élément de structure filé (F), qui est en alliage (A) et qui est fixé, par exemple par soudage ou rivetage, sur un produit ou élément de structure (E), peut être fixé, par exemple par rivetage ou boulonnage, sur d'autres produits. Cela suppose en général que le corps de l'élément de structure filé (F) ait une forme qui se prête à ce type d'assemblage. Ce mode de réalisation est illustré sur la figure 10 qui montre un produit (20), représentant le produit (E), dont une des surfaces (11) a été usinée. Un élément de structure filé (F) selon l'invention (repère 12), avec un pied (13) en alliage soudable et un corps (14), a été soudé sur le produit (E), avec formation d'une zone soudée (15). Le corps (14) de l'élément de structure filé est fixé par rivet (16) sur un autre élément de structure (17). Un tel élément de structure complexe peut être utilisé en construction aéronautique en tant qu'assemblage de cadres de fuselage : dans ce cas le corps (14) du profilé filé bi-fonctionnel (F) selon l'invention (12) est en alliage de la série 2xxx, et le pied (13) en alliage 4xxx, 5xxx ou 7xxx, le produit (20) est la peau de fuselage, (12) est un « raidisseur » (en anglais shear web), et (17) le cadre.

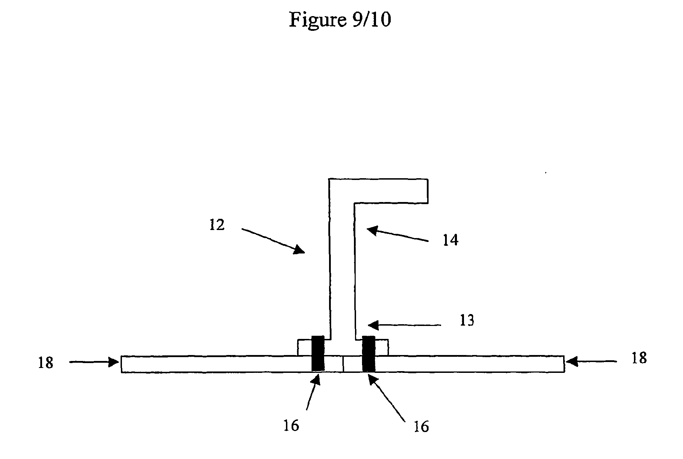

La figure 9 montre un mode de réalisation d'un élément de structure (G) à partir d'un élément de structure filé bi-fonctionnel (F) selon l'invention par rivetage. L'élément de structure bi-fonctionnel (12) présente un corps (14) en alliage de la série 7xxx, à haute résistance mécanique, et un pied (13) en alliage de la série 2xxx, à haute tolérance aux dommages. Le pied (13) est fixé par rivets (16) sur deux éléments de structure (E) adjacents (repère 18). Un tel élément de structure (G) peut être utilisé pour la construction du fuselage d'avions.

D'autres modes de réalisation de la présente invention sont décrits dans les revendications dépendantes.

Dans les exemples qui suivent, on décrit à titre d'illustration des modes de réalisation avantageux de l'invention. Ces exemples n'ont pas de caractère limitatif.

### Exemple

Dans cet exemple, on fabrique des éléments de structure filés avec un corps en alliage AA7349 et un pied en alliage AA6056 (référence P6) ou en alliage AA5086 (référence P5).

On prépare une billette de filage creuse comportant une partie concentrique extérieure en alliage AA7349 et une partie intérieure concentrique en alliage AA6056 ou AA5086 de la manière suivante : on coule une première billette en alliage AA7349 et usine dans cette billette un cylindre avec un diamètre extérieur de 189 mm. Dans ce cylindre, on aménage un canal de section circulaire (diamètre D) de manière à ce que l'axe longitudinal du cylindre et l'axe longitudinal du canal coïncident. Ledit canal traverse toute la longueur dudit cylindre.

A partir d'une deuxième billette en alliage AA6056 ou AA5086, on prépare un cylindre avec un diamètre externe D et un canal de section circulaire (diamètre d) de manière à ce que l'axe longitudinal du cylindre et l'axe longitudinal du canal coïncident. Ledit canal traverse toute la longueur dudit cylindre.

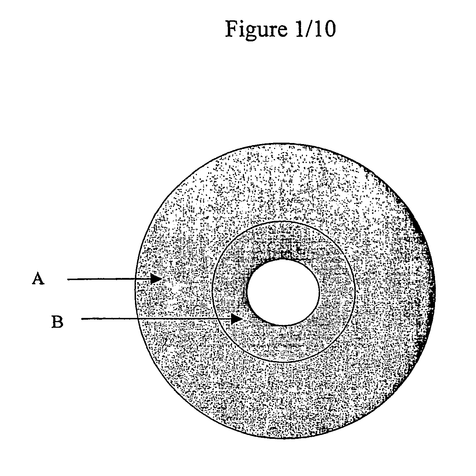

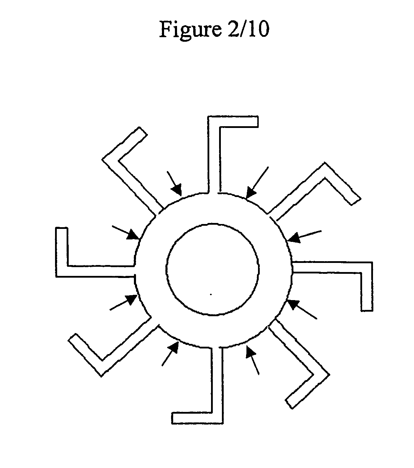

On obtient ainsi deux tubes cylindriques creux, l'un en alliage 7349, l'autre en alliage AA6056 ou AA5086, avec D = 85 mm et d = 53 mm. Après expansion à chaud à 120°C du tube en alliage 7349, on insère le tube en alliage 6056 dans le tube en alliage 7349. On obtient ainsi une billette cylindrique creuse dont la section est montrée de manière schématique sur la figure 1. On file sur aiguille par filage direct à une température du bloc de 420°C. La section du profilé extrudé est montrée sur la figure 2. Dans cet exemple, le rapport d'extrusion est de 11. Le profilé obtenu a été découpé dans le sens de sa longueur : une longueur de profilé donne ainsi huit longueurs de raidisseur (voir figure 2).

Pour chaque type de raidisseur (référence P5 ou P6), les corps et pieds, à l'état T76, ont été caractérisés par leur limite élastique R_{p0.2}, leur résistance à la rupture Rₘ et leur allongement à rupture A, voir tableaux 1 et 2. A titre de comparaison, le tableau 3 donne le même type de résultats pour un raidisseur obtenu par filage direct sur aiguille avec une billette monobloc (référence P7) en alliage AA7349. Les conditions de filage étaient comparables à celles des références P5 et P6. Pour ce raidisseur P7, le pied et le corps sont donc tous les deux en alliage AA7349.

**Tableau 1**

| | | Pied (alliage AA5086) | | | Corps (alliage AA7349) | | |
|---|---|---|---|---|---|---|---|
| Référence | Repère | R_{p0.2} [MPa] | Rₘ [MPa] | A% | **R**_{p0.2} [MPa] | Rₘ [MPa] | A [%] |
| P5 | 1 | 595 | 659 | 12.8 | 670 | 724 | 7.7 |
| P5 | 2 | 593 | 659 | 11.2 | 666 | 723 | 7.7 |
| P5 | 3 | 589 | 653 | 11.7 | 665 | 720 | 6.6 |
| P5 | 4 | 581 | 648 | 10.9 | 665 | 721 | 7.0 |
| P5 | 5 | 578 | 646 | 10.1 | 665 | 722 | 8.4 |
| P5 | 6 | 586 | 652 | 11.9 | 669 | 727 | 8.5 |
| P5 | 7 | 585 | 650 | 12.2 | 664 | 722 | 8.2 |
| P5 | 8 | 589 | 653 | 13.0 | 668 | 726 | 7.8 |
| Moyenne | | 587 | 653 | 11.7 | 667 | 723 | 7.7 |

**Tableau 2**

| | | Pied (alliage AA6056) | | | Corps (alliage AA7349) | | |
|---|---|---|---|---|---|---|---|
| Référence | Repère | R_{p0.2} [MPa] | Rm [MPa] | A% | R_{p0.2} [MPa] | Rₘ [MPa] | A% |
| P6 | 1 | 593 | 656 | 10.9 | 669 | 725 | 7.8 |
| P6 | 2 | 595 | 658 | 12.7 | 666 | 722 | 9.5 |
| P6 | 3 | 596 | 660 | 11.9 | 677 | 731 | 7.6 |
| P6 | 4 | 597 | 663 | 11.8 | 672 | 725 | 7.0 |
| P6 | 5 | 594 | 658 | 10.8 | 674 | 726 | 6.1 |
| P6 | 6 | 593 | 655 | 10.0 | 673 | 725 | 6.4 |
| P6 | 7 | 595 | 661 | 11.1 | 677 | 728 | 6.4 |
| P6 | 8 | 597 | 662 | 11.9 | 673 | 727 | 6.9 |
| Moyenne | | 595 | 659 | 11.4 | 673 | 726 | 7.2 |

**Tableau 3**

| | | Pied (alliage AA7349) | | | Corps (alliage AA7349) | | |
|---|---|---|---|---|---|---|---|
| Référence | Repère | R_{p0.2} [MPa] | Rₘ [MPa] | A% | R_{p0.2} [MPa] | Rm [MPa] | A% |
| P7 | 1 | 597 | 665 | 11.1 | 669 | 724 | 11.1 |
| P7 | 2 | 599 | 667 | 13.4 | 674 | 729 | 11.6 |
| P7 | 3 | 602 | 664 | 14.3 | 678 | 731 | 10.3 |
| P7 | 4 | 593 | 660 | 12.9 | 676 | 730 | 10.7 |
| P7 | 5 | 594 | 661 | 13.3 | 669 | 723 | 9.5 |
| P7 | 6 | 599 | 666 | 13.6 | 676 | 733 | 11.3 |
| P7 | 7 | 598 | 665 | 13.1 | 676 | 732 | 1.6 |
| P7 | 8 | 596 | 667 | 12.7 | 670 | 725 | 11.3 |
| Moyenne | | 597 | 664 | 13.0 | 674 | 728 | 10.9 |

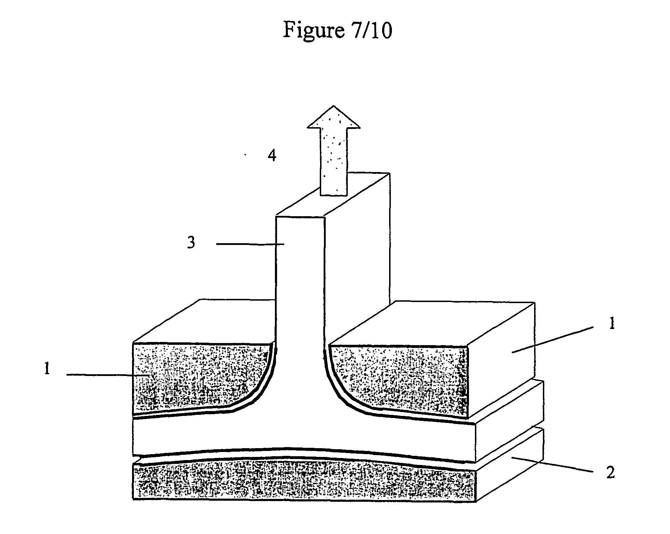

On caractérise la qualité de la liaison métallurgique entre les deux alliages (A) et (B) en mesurant la force d'arrachement du corps de l'élément de structure lorsque le pied est fixé dans un dispositif de maintien rigide. Ce dispositif est montré de manière schématique sur la figure 7. On découpe une section de l'élément de structure (F) à tester, et on le fixe entre des mors 1, 2. La forme des mors est adaptée à la courbure du produit pour garantir un contact parfait entre les mors et l'échantillon. A une distance suffisante des mors, le corps 3 du produit est pris entre les mors (non représentés sur la figure 7) d'une machine de traction. Une force d'arrachement 4 est appliquée et augmentée jusqu'à la rupture du produit à tester. On enregistre la force. Il est possible de calculer approximativement une contrainte de traction en divisant la force par la section A. Les résultats de cet essai d'arrachement sont donnés dans les tableaux 4, 5 et 6.

**Tableau 4**

| Référence | Repère | Force arrachement (N) | Contrainte d'arrachement [MPa] |
|---|---|---|---|
| P5 | 1 | 32691 | 382 |
| P5 | 2 | 29481 | 344 |
| P5 | 3 | 33860 | 397 |
| P5 | 4 | 33641 | 389 |
| P5 | 5 | 34354 | 399 |
| P5 | 6 | 33218 | 391 |
| P5 | 7 | 31673 | 372 |
| P5 | 8 | 30530 | 355 |

**Tableau 5**

| Référence | Repère | Force arrachement (N) | Contrainte d'arrachement [MPa] |
|---|---|---|---|
| P6 | 1 | 33125 | 384 |
| P6 | 2 | 28642 | 333 |
| P6 | 3 | 28399 | 329 |
| P6 | 4 | 29690 | 344 |
| P6 | 5 | 37197 | 434 |
| P6 | 6 | 34993 | 406 |
| P6 | 7 | 36528 | 425 |
| P6 | 8 | 32394 | 377 |

**Tableau 6**

| Référence | Repère | Force arrachement (N) | Contrainte d'arrachement [MPa] |
|---|---|---|---|
| P7 | 1 | 47616 | 554 |
| P7 | 2 | 47333 | 550 |
| P7 | 3 | 51164 | 595 |
| P7 | 4 | 52700 | 613 |
| P7 | 5 | 54283 | 631 |
| P7 | 6 | 52877 | 615 |
| P7 | 7 | 51907 | 604 |
| P7 | 8 | 48213 | 561 |

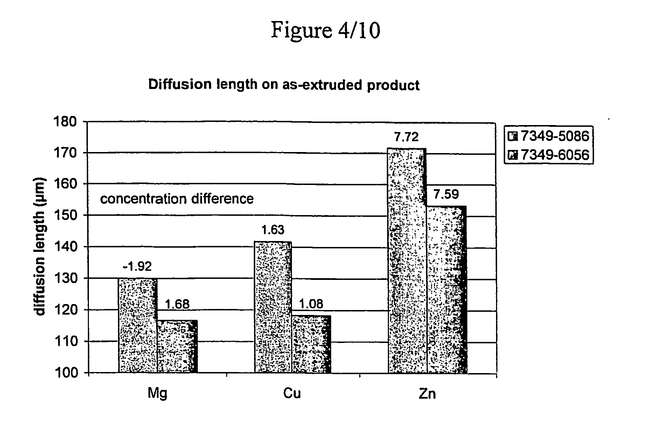

On constate par observation en microscopie optique de P5 et P6 avant mise en solution que l'interface entre le pied et le corps est très nette ; on n'observe pas un mélange des deux alliages (A) et (B), mais une zone de diffusion dont la largeur ne dépasse pas 180 µm pour la référence P5, et 160 µm pour la référence P6. Cela ressort de la figure 4 qui montre la longueur de la zone de diffusion déterminée pour un tube creux représentatif par sonde électronique (electron probe micro-analysis) pour deux combinaisons d'alliages (A) et (B) et trois éléments suivis, le magnésium, le cuivre et le zinc.

## Revendications

1. Elément de structure filé (F), notamment un raidisseur pour construction aéronautique, comprenant un pied (13) apte à être fixé sur une surface, et un corps (14), **caractérisé en ce que** ledit pied (13) est en un premier alliage à base d'aluminium soudable par fusion (B) et **en ce que** ledit corps (14) est en un second alliage à base d'aluminium (A) à traitement thermique, étant entendu que les premier et second alliages (A) et (B) sont différents.

2. Elément de structure selon la revendication 1 dans lequel le second alliage (A) est un alliage du groupe 7xxx.

3. Elément de structure selon la revendication 2, dans lequel le second alliage (A) est sélectionné dans le groupe constitué par les alliages 7049, 7149, 7249, 7349, 7449, 7050, 7055, 7075, 7068, 7036, 7136.

4. Elément de structure selon une quelconque des revendications 1 à 3, dans lequel le premier alliage (B) est un alliage du groupe 6xxx, du groupe 4xxx ou du groupe 5xxx.

5. Elément de structure selon une quelconque des revendications 1 à 4, dans lequel le premier alliage (B) est sélectionné dans le groupe constitué par les alliages 6056, 6056A, 6156, 6060, 6013, 6110, 5005, 5083, 5086.

6. Procédé de fabrication d'un élément de structure filé (F) selon une quelconque des revendications 1 à 5 notamment pour construction aéronautique, comprenant les étapes suivantes :
(a) on prépare une billette de filage cylindrique creuse à symétrie axiale composée d'un tube externe en un second alliage à base d'aluminium (A) à traitement thermique, et d'un tube interne en un premier alliage à base d'aluminium soudable par fusion (B),
(b) on file par filage sur aiguille un tube creux comportant une pluralité d'ailettes, de manière à ce que lesdites ailettes soient pour leur plus grande partie en second alliage (A), alors que la paroi du tube creux est en premier alliage (B),
(c) on découpe, et éventuellement usine, le produit issu de l'étape (b) de manière à obtenir un élément de structure (F) comportant un pied (13) en premier alliage (B) et un corps (14) en second alliage (A).

7. Procédé selon la revendication 6, dans lequel l'insertion dudit tube interne en premier alliage à base d'aluminium (B) dans ledit tube externe en second alliage à base d'aluminium (A) à traitement thermique se fait par contraction à froid dudit tube interne.

8. Procédé selon la revendication 6 ou 7, dans lequel le filage est un filage inverse.

9. Procédé selon une quelconque des revendications 6 à 8, dans lequel le second alliage (A) est sélectionné dans le groupe constitué par les alliages 7049, 7149, 7249, 7349, 7449, 7050, 7055, 7075, 7068, 7036, 7136.

10. Procédé selon une quelconque des revendications 6 à 9, dans lequel le premier alliage (B) est sélectionné dans le groupe constitué par les alliages 6056, 6056A, 6156,6060,6013,6110,5005,5083,5086.

11. Utilisation d'un élément de structure filé (F) selon l'une quelconque des revendications 1 à 5 dans un procédé de fabrication d'un élément de structure (G), notamment pour construction aéronautique, dans lequel
(a) on soude par fusion un élément de structure filé (F) selon l'une quelconque des revendications 1 à 5 sur un produit ou élément de structure (E) en alliage d'aluminium à traitement thermique, pour obtenir un élément de structure soudé (G),
(b) on effectue optionnellement un traitement thermique sur ledit élément de structure soudé (G).

## Claims

1. Extruded structural element (F), particularly a stringer for aeronautical construction, comprising a base (13) that can be fixed onto a surface, and a body (14), **characterised in that** the said base (13) is in a first aluminium-based fusion weldable alloy (B) and **in that** the said body (14) is in a second aluminium-based alloy (A) heat treatable, with the proviso that the first and second alloys (A) and (B) are different.

2. Structural element according to claim 1 in which the second alloy (A) is an alloy from the group 7xxx.

3. Structural element according to claim 2, in which the second alloy (A) is selected from the group consisting of 7049, 7149, 7249, 7349, 7449, 7050, 7055, 7075, 7068, 7036, 7136 alloys.

4. Structural element according to any one of claims 1 to 3, in which the first alloy (B) may be an alloy in the 6xxx, 5xxx or 4xxx group.

5. Structural element according to any one of claims 1 to 4, in which the first alloy (B) is selected from the group consisting of 6056, 6056A, 6156, 6060, 6013, 6110, 5005, 5083, 5086 alloys.

6. Manufacturing process for an extruded structural element (F) according to any one of claims 1 to 5, particularly for aeronautical construction, comprising the following steps:
(a) a hollow cylindrical extrusion billet with axial symmetry is prepared composed of an external tube made of a heat treatable aluminium-based alloy (A) and an internal tube made of an aluminium-based alloy (B),
(b) a hollow tube is extruded on a mandrel comprising a plurality of ribs, such that most of the said ribs are made of second alloy (A), while the wall of the hollow tube is made of first alloy (B),
(c) the product derived from step (b) is cut out and possibly machined, so as to obtain a structural element (F) comprising a base (13) made of first alloy (B) and a body (14) made of second alloy (A).

7. Process according to claim 6, in which the said internal tube made of first aluminium-based alloy (B) into the said external tube made of second heat treatable aluminium-based alloy (A) is inserted by cold contraction of the said internal tube.

8. Process according to claim 6 or 7, in which extrusion is an inverse extrusion.

9. Process according to any one of claims 6 to 8, in which the second alloy (A) is selected from the group composed of the 7049, 7149, 7249, 7349, 7449, 7050, 7055, 7075, 7068, 7036, 7136 alloys.

10. Process according to any one of claims 6 to 9, in which the first alloy (B) is selected from the group composed of the 6056, 6056A, 6156, 6060, 6013, 6110, 5005, 5083, 5086 alloys.

11. Use of an extruded structural element according to any one of claims 1 to 5 in a manufacturing process for a structural element (G), particularly for aeronautical construction, in which
(a) an extruded structural element (F) according to any one of claims 1 to 5 is fusion welded onto a structural product or element (E) made of a heat treatable aluminium alloy, to obtain a welded structural element (G),
(b) a heat treatment is optionally performed on the said welded structural element (G).

## Patentansprüche

1. Stranggepresstes Strukturelement (F), insbesondere ein Versteifungselement für den Flugzeugbau, mit einem an einer Oberfläche befestigbaren Fuß (13) und einem Körper (14), **dadurch gekennzeichnet, dass** der Fuß (13) aus einer schmelzschweißbaren ersten Aluminiumlegierung (B) besteht und der Körper (14) aus einer wärmebehandelten zweiten Aluminiumlegierung (A) besteht, wobei die erste und die zweite Legierung (A) und (B) voneinander verschieden sind.

2. Strukturelement nach Anspruch 1, bei dem die zweite Legierung (A) eine Legierung der Gruppe 7xxx ist.

3. Strukturelement nach Anspruch 2, bei dem die zweite Legierung (A) aus der Gruppe bestehend aus den Legierungen 7049, 7149, 7249, 7349, 7449, 7050, 7055, 7075, 7068, 7036, 7136 ausgewählt ist.

4. Strukturelement nach irgendeinem der Ansprüche 1 bis 3, bei dem die erste Legierung (B) eine Legierung der Gruppe 6xxx, der Gruppe 4xxx oder der Gruppe 5xxx ist.

5. Strukturelement nach irgendeinem der Ansprüche 1 bis 4, bei dem die erste Legierung (B) aus der Gruppe bestehend aus den Legierungen 6056, 6056A, 6156, 6060, 6013, 6110, 5005, 5083, 5086 ausgewählt ist.

6. Verfahren zur Herstellung eines stranggepressten Strukturelements (F) nach irgendeinem der Ansprüche 1 bis 5 insbesondere für den Flugzeugbau mit folgenden Schritten:
(a) Es wird ein achssymmetrischer, hohler, zylindrischer Pressbarren hergestellt, bestehend aus einem Außenrohr aus einer wärmebehandelten zweiten Aluminiumlegierung (A) und einem Innenrohr aus einer schmelzschweißbaren ersten Aluminiumlegierung (B).
(b) Durch Strangpressen über Dorn wird ein hohles Rohr mit einer Vielzahl von Flügeln so hergestellt, dass die Flügel zum größten Teil aus der zweiten Legierung (A) bestehen, während die Wand des hohlen Rohrs aus der ersten Legierung (B) besteht.
(c) Das aus Schritt (b) hervorgehende Erzeugnis wird geschnitten und eventuell bearbeitet, um ein Strukturelement (F) zu erhalten, das einen Fuß (13) aus der ersten Legierung (B) und einen Körper (14) aus der zweiten Legierung (A) aufweist.

7. Verfahren nach Anspruch 6, bei dem das Einbringen des Innenrohrs aus der ersten Aluminiumlegierung (B) in das Außenrohr aus der wärmebehandelten zweiten Aluminiumlegierung (A) durch Kaltschrumpfen des Innenrohrs erfolgt.

8. Verfahren nach Anspruch 6 oder 7, bei dem das Strangpressen ein Indirektpressen ist.

9. Verfahren nach irgendeinem der Ansprüche 6 bis 8, bei dem die zweite Legierung (A) aus der Gruppe bestehend aus den Legierungen 7049, 7149, 7249, 7349, 7449, 7050, 7055, 7075, 7068, 7036, 7136 ausgewählt wird.

10. Verfahren nach irgendeinem der Ansprüche 6 bis 9, bei dem die erste Legierung (B) aus der Gruppe bestehend aus den Legierungen 6056, 6056A, 6156, 6060, 6013, 6110, 5005, 5083, 5086 ausgewählt wird.

11. Verwendung eines stranggepressten Strukturelements (F) nach irgendeinem der Ansprüche 1 bis 5 in einem Verfahren zur Herstellung eines Strukturelements (G), insbesondere für den Flugzeugbau, bei dem
(a) ein stranggepresstes Strukturelement (F) nach irgendeinem der Ansprüche 1 bis 5 auf ein Erzeugnis oder Strukturelement (E) aus einer wärmebehandelten Aluminiumlegierung schmelzgeschweißt wird, um ein geschweißtes Strukturelement (G) zu erhalten,
(b) an diesem geschweißten Strukturelement (G) optional eine Wärmebehandlung durchgeführt wird.
